# EUROPEAN PATENT SPECIFICATION

(11) **EP 0 462 677 B1**
(45) Date of publication and mention of the grant of the patent: **28.02.2001**
(21) Application number: 91201546.8
(22) Date of filing: 18.06.1991
(51) Int. Cl.: C08F 218/10, C08F 220/12, C09D 131/02, C09D 133/06, C09D 5/02

(54) **Process for the preparation of interpolymer dispersions from vinyl esters of branched chain carboxylic acids and ethylenically unsaturated acids and/or their esters**
Verfahren zur Herstellung von Interpolymerdispersionen aus Vinylestern von verzweigter Karboxylsäure und äthylenisch ungesättigten Säuren bzw. ihren Estern
Procédé pour la préparation de dispersions de copolymères d'esters vinyliques d'acides carboxyliques ramifiés et d'acides à insaturation éthylénique et/ou leurs esters

(30) Priority: 20.06.1990 GB 9013722
(43) Date of publication of application: 27.12.1991
(73) Proprietor: SHELL INTERNATIONALE RESEARCH MAATSCHAPPIJ B.V., 2596 HR Den Haag (NL)
(72) Inventor: Andre, Olivier Louis Pierre, B-1348 Ottignies-Louvain-la-Neuve (BE); Gerets, Carine Helena Paula, B-1348 Ottignies-Louvain-la-Neuve (BE); Scholten, Henricus Paulus Hubertus, B-1348 Ottignies-Louvain-la-Neuve (BE); van Kerckhove, Marc Marie Joseph Marthe, B-1348 Ottignies-Louvain-la-Neuve (BE)

(56) References cited:
- EP-A- 0 002 548
- GB-A- 1 145 564
- Polym. Paint Color J., vol. 178, no. 4226, November 16 1988, pages 852-858; Henk Scholten et al. "Recent developments in latexes based on vinyl esters of branched monocarboxylic 2 acids"

## Description

This invention relates to interpolymers of vinyl esters of branched chain carboxylic acid and one or more ethylenically unsaturated acids and/or their esters, to aqueous dispersions containing such interpolymers, to the preparation of such interpolymers, to heat curable (top)coat compositions comprising such dispersions.

More particularly the invention relates to interpolymers of vinyl esters of branched chain carboxylic acids, containing in the acid group from 9 to 10 carbon atoms, one or more ethylenically unsaturated acid and esters thereof, at least one of which contains a hydroxyl group in the ester moiety.

Several publications are known that disclose similar compositions which, however, show unattractive water absorption characteristics (JP-A-62,164,781) ; contain ingredients which are known to cause yellowing of coating films on exposure to light (International patent application WO 90/00570); retain very high contents of starting monomers (DE-A-2,032,647); or result in copolymers that, due to clouding after dissolution, are inapplicable for coating formulations (DE-A-2,422,043 and DE-A-2,615,101).

E.g., GB-A-1,087,623 discloses thermosetting coating compositions based on thermoplastic copolymers containing hydroxyl groups, and aminoplast resins, containing a mixture of the following composition dissolved in an organic solvent:
A: 55 to 95% by weight of a thermoplastic copolymer obtained by copolymerizing a mixture consisting of
   (a) 10 to 50% by weight of a Versatic acid 911 vinyl ester (Versatic acid is a registered trademark);
   (b) 0 to 6% by weight of a copolymerizable α,β-ethylenically unsaturated monocarboxylic acid, or a partial ester of a α,β-ethylenically unsaturated di- or polycarboxylic acid derived from an alkanol, containing 1 to 8 carbon atoms;
   (c) 20 to 50% by weight of methyl methacrylate;
   (d) 20 to 50% by weight of an alkyl acrylate in which the alkyl radical contains between 4 and 18 carbon atoms;
   (e) 5 to 20% by weight of hydroxyalkyl, hydroxyaryl or hydroxyarylalkyl ester of an α,β-ethylenically unsaturated carboxylic acid, and
B: 5 to 45% by weight of a resin forming condensate of an aldehyde and urea, or N,N'-ethylene urea or dicyanodiamide or an aminotriazine, alkylated with cyclohexanol or with an alkanol containing 1 to 6 carbon atoms.

It will be appreciated by a person skilled in the art, that in these interpolymer coating compositions only an organic solvent may be used as vehicle and replacement without any adaptation of such organic solvent by an aqueous vehicle gives only unstable solutions and unattractive coating compositions.

GB-A-1,145,564 discloses a process for the production of thermoplastic copolymers which are to be used in coating compositions and which contain hydroxyl groups.

The process of said GB-A-1,145,564 comprises the polymerization in an organic solvent and in the presence of a polymerization initiator, a monomer mixture comprising
(a) 10 to 50% by weight of a vinyl ester of a branched carboxylic acid which does not contain more than 19 carbon atoms;
(b) 0 to 6% by weight of a copolymerizable α,β-ethylenically unsaturated monocarboxylic acid, dicarboxylic acid or polycarboxylic, or a partial ester of such a dicarboxylic or polycarboxylic acid with an alkanol with 1 to 8 carbon atoms;
(c) 20 to 50% by weight of methyl methacrylate;
(d) 20 to 50% by weight of an alkyl acrylate, in which the alkyl radical contains 4 to 18 carbon atoms; and
(e) 5 to 20% by weight of a hydroxyalkyl or hydroxyarylalkyl ester of an α,β-ethylenicallyunsaturated carboxylic acid.

It will be appreciated that said disclosed interpolymer compositions have the same disadvantages as specified hereinbefore.

On the one hand, it is still a generally existing conception under persons skilled in the art, that alkyl methacrylates and/or alkyl acrylates and vinyl esters with a branched carbon chain are extremely difficult to copolymerize into a substantially random copolymer, due to a large difference in reactivity of the respective monomers. Therefore the copolymerization of monomer pairs to a polymer dispersion at lower temperatures showing attractive properties of the coating films, has been regarded as rather difficult or even impossible as can be derived from e.g. VeoVa Technical Manual VM 2.1, pages 7 and 8, Technical Bulletin, issued June, 1988 (VeoVa is a registered trademark).

Said conception also could be derived from the lectures held during Fatipec Louvain-la-Neuve, Belgium, September 11, 1989 and during NVVT Meeting, Rotterdam, the Netherlands, May 23, 1989.

It is generally known that the copolymerization in organic solvents of the last two components is accompanied by marked clouding of the solutions. In addition, the theoretically expected yield cannot be reached because some of the monomer does not polymerize and give rise to the aforementioned unattractive properties.

On the other hand e.g. according to page 3 and to the examples of said British patent specifications GB-A-1,145,564 and GB-A-1,087,623 copolymers are mentioned, prepared by copolymerization of Versatic acid 911 - vinyl ester. This Versatic acid 911 - vinyl ester is really a mixture of vinyl esters of branched chain synthetic monocarboxylic acids containing 9-11 carbon atoms, as is known from e.g. Book VII Congress Fatipec, pages 49-60 (Verlag Chemie GmbH, Weinheim) in the article by P. Bruin et al, entitled "Latices based on copolymers of vinyl esters of branched carboxylic acids and vinyl acetate".

It will be appreciated that there is a still growing need for high quality heat curable top coat compositions, which can meet the requirements of the present industrial application and more particularly the automotive industry and the like, characterized by well controlled, highly automated standardised coating operations and heat curing (stoving) and relatively short and reproducible drying times and stoving times, starting from relatively cheap and easily prepared topcoats compositions of standard reproducible properties.

More particularly, due to the still growing environmental concern, there is a still growing need for aqueous automotive coatings and more particularly heat curable, automotive topcoats which fulfil the aforementioned requirements.

For such heat curing automotive topcoats the use of any surfactant to disperse the interpolymer and relatively large amounts of ethylenically unsaturated acid comonomer will have to be avoided, as these will deteriorate the properties of the final film.

It will be appreciated that the presence of regularly distributed carboxyl groups in the interpolymer to be formed, for good dispersability of this interpolymer in water, and of regularly distributed hydroxyl groups in the interpolymer, for cross-linking interpolymer molecules during the heat curing process, are desired.

From several publications e.g. Dispersions of polymeric acrylic soaps III, N.B. Graham, H.W. Holden and F.L. Raymond, Brit. Polym. J 2(3), 141-145 and Viscosity of Cosolvent/Water solutions of amine neutralized Acrylic Copolymers, L.W. Hill, B.M. Richards, Journal of Coatings Technology, vol. 51, No. 654, July 1979, it was known, that for the preparation of sufficiently stable interpolymer dispersions, amounts of at least 6% by weight of carboxylic acid monomer relative to the weight of total monomers will be necessary.

Moreover, it will be appreciated that the reaction temperature of the preparation of such interpolymers cannot be increased too much to reach a desired comparative reactivity of the vinyl ester of a branched chain fatty acid on the one hand and (meth)acrylic acid and hydroxy alkyl acrylates or methacrylates on the other hand, because at too high temperatures these incorporated COOH and OH groups will react with each other.

Therefore, it is an object of the present invention to provide aqueous interpolymer dispersions for the preparation of the desired coating compositions, the interpolymers in which show a substantially random backbone, which is provided with regularly distributed pendant carboxyl groups and hydroxyl groups, the amount of carboxyl groups in which does not exceed a certain limit, governed by finally desired film properties.

As a result of extensive research and experimentation this aim could surprisingly be reached by providing a process for preparing hydroxyl groups and carboxyl groups containing interpolymers, by radical solution polymerization of:
(a) hydroxyalkyl esters of ethylenically unsaturated acids, wherein the acid moiety contains from 2 to 9 carbon atoms, wherein the hydroxy alkyl moiety contains from 2 to 6 carbon atoms,in an amount of from 4 to 20 %wt, calculated relative to the weight of the complete monomer mixture;
(b) an ethylenically unsaturated acid, containing from 2 to 9 carbon atoms, in an amount of from 4 to 20 %wt, calculated relative to the weight of the complete monomer mixture;
(c) alkyl esters of ethylenically unsaturated acids, containing from 2 to 9 carbon atoms, the alkyl group of which may contain from 4 to 8 carbon atoms, in an amount of from 10 to 70 %wt, calculated relative to the weight of the complete monomer mixture;
(d) the vinyl ester of Versatic acid (being a trademark), containing in the acid moiety 9 carbon atoms, optionally mixed with up to 30 %wt of the total weight of said vinyl esters, of the vinyl ester of Versatic acid, containing in the acid moiety 10 carbon atoms in an amount of from 10 to 70 %wt, calculated relative to the weight of the complete monomer mixture; and
(e) alkyl esters of methacrylic acid and/or acrylic acid, the alkyl group in which contains from 1 to 3 carbon atoms, in an amount of from 10 to 70 %wt, calculated relative to the weight of che complete monomer mixture;
the sum of the respective amounts of components being 100%, at a temperature in the range of from 110 to 150 °C in an inert, water miscible organic solvent system, by
(1) starting with an initial reactor charge of the solvent in an amount of from 10 to 20 %wt of the total weight of the monomers, wherein has been dissolved an amount of from 10 to 15 %wt of the total amount of component (d), and from 1 to 8 %wt of the total amount of the components (a), (b), (c) and (e);
(2) heating the reactor charge to the desired reaction temperature; and
(3) at this substantially constant temperature, gradually adding the remaining monomers and an amount of initiator of from 1 to 5 %wt, calculated relative to the total weight of the monomers, within a period from 3 to 5 hours, followed by a post reaction during from 1 to 3 hours.

Suitable examples of ethylenically unsaturated acids containing from 2 to 9 carbon atoms are methacrylic acid, acrylic acid, crotonic acid, isocrotonic acid, ethacrylic acid, phenylacrylic acid, maleic acid, fumaric acid, itaconic acid and citraconic acid.

Suitable examples of hydroxyalkyl esters of ethylenically unsaturated acids contain primary or secondary hydroxyl groups, such as hydroxyethyl acrylate, hydroxypropyl acrylate, hydroxybutyl acrylate, hydroxyamyl acrylate, hydroxyhexyl acrylate, hydroxyoctyl acrylate and the corresponding methacrylates, crotonates, isocrotonates, maleates and fumarates, and 2-hydroxypropyl acrylate, 2-hydroxybutyl acrylate, 3hydroxybutyl acrylate and the corresponding methacrylates, crotonates, isocrotonates, maleates and fumarates.

Suitable examples of lower alkyl esters of ethylenically unsaturated acids (component e) are methyl (meth)acrylate, ethyl (meth)acrylate, propyl (meth)acrylate, isopropyl (meth)acrylate.

Preferred comonomer component (a) is selected from hydroxyethyl esters of the hereinbefore specified ethylenically unsaturated acids and the most preferred comonomers are hydroxyethyl methacrylate or hydroxyethyl acrylate.

Preferred comonomer component (b) is selected from acrylic acid and/or methacrylic acid.

Preferred comonomer component (c) is selected from n-butyl esters, iso-butyl esters, n-pentyl esters, isopentyl esters or n-hexyl esters of the hereinbefore specified acids and the most preferred comonomers are n-butyl esters of acrylic acid and/or methacrylic acid.

As preferred comonomer component (d) substantially pure VeoVa 9 is used.

Preferred comonomer component (e) is selected from methyl acrylate, methyl methacrylate, ethyl acrylate or ethyl methacrylate.

The most preferred comonomer starting compositions for the process of the present invention are those, comprising:
(a) from 8 to 11 %wt hydroxyalkyl acrylate,
(b) from 4 to 8 %wt acrylic acid,
(c) from 23 to 30 %wt butyl acrylate,
(d) from 23 to 30 %wt VeoVa 9, and
(e) from 23 to 30 %wt methyl methacrylate, the total amounting to 100%.

The copolymerization reaction is carried out in an inert, water miscible organic solvent for which several organic solvents type may be used, such as glycol ethers, esters, and alcohols or mixtures thereof.

Examples of suitable solvents are: relatively high boiling alcohols, such as n-hexanol, 2-ethyl hexanol, isooctyl alcohol, isononyl alcohol, isodecyl alcohol, isotridecyl alcohol, cyclohexanol, methylcyclohexanol, tetrahydrofuryl alcohol, diacetone alcohol, 2,6-dimethyl-4-heptanol, 4-methyl-2-pentanol, tridecanol, glycols and glycol derivatives, such as ethyleneglycol, 1,2-propyleneglycol, 1,3-butyleneglycol, butanediol-1,4, hexyleneglycol, 2-ethylhexanediol-1,3, diethyleneglycol, triethyleneglycol, dipropyleneglycol, trihydroxymethyl propane and ethoxylated or ether derivatives thereof. A preferred class of solvents to be used for said radical solution polymerization are diols and those according to the formulae: 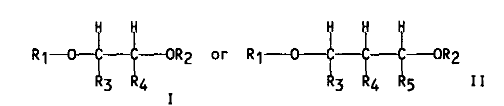 wherein R₁ and R₂ each may independently represent hydrogen or lower alkyl group having from 2 to 6 carbon atoms and preferably from 3 to 4 carbon atoms, under the proviso that at most one of R₁ and R₂ may represent hydrogen, and wherein R₃, R₄ and R₅ each may independently represent hydrogen, hydroxyl or ethoxylated hydroxyl, or lower alkyl as specified hereinbefore, under the proviso that at most one of the symbols R₃, R₄ and R₅ may represent hydroxyl or ethoxylated hydroxyl.

The most preferred class of solvents are those according to the formulae I or II wherein R₃, R₄ and R₅ are hydrogen and wherein R₁ or R₂ is lower alkyl.

As most preferred solvent butylOXITOL (ethylene glycol mono-n-butylether, butylOXITOL and OXITOL are registered trademarks) is used.

The solvent is used in an amount of from 10 to 20 %wt of the total weight of the monomers and preferably in an amount of from 12 to 17 %wt.

In general the radical solution polymerization is carried out by starting with an initial reactor charge of the solvent in the indicated amount and therein dissolved in an amount of from 5 to 15 %wt of the total amount of the Veova and from 1 to 8 %wt of the total amount of the ethylenically unsaturated acids and esters thereof. According to a preferred embodiment amounts of 10 %wt of VeoVa and 5% of the total amount of (meth)acrylates and (meth)acrylic acids are used. To this initial reactor charge, heated up to the desired reaction temperature, which is maintained at about the same value during the further addition, the remaining VeoVa and ethylenically unsaturated acids and esters, as specified hereinbefore, and an amount of initiator of from 1 to 5 %wt and preferably of from 2 to 4 %wt, calculated relative to the total weight of the monomers, are gradually added within a period of from 3 to 5 hours and preferably of from 3.5 to 4.5 hours, followed by a post reaction during from 1 to 3 hours and preferably of about 2 hours, after optional addition of an additional smaller proportion of the total initiator amount.

As initiator for the radical polymerization a great variety of organic peroxide compounds can be used such as dibenzoylperoxide, dicumylperoxide, cumylhydroperoxide, di-t-butylperoxide, t-butylperoxybenzoate, t-butylhydroperoxide, 2,2-di-t-butylperoxybutane, t-amylperbenzoate, 1,3-bis (t-butylperoxyisopropyl)benzene, diisopropylbenzene monohydroperoxide and diacylperoxide, such as diacetylperoxide; peroxyketal, such as 2,2-di(t-amylperoxy)propane, t-amylperoxy-2-ethylhexanoate and ethyl-3,3-di(t-amylperoxy)butyrate or aliphatic azo compounds such as azobiscyclohexane nitrile.

As preferred initiator is used t-butylperoxybenzoate (Trigonox C, a trademark) in an amount of from 2 to 4 %wt, calculated relative to the total weight of monomers.

It will be appreciated that, if necessary, the radical solution polymerization can be carried out in the presence of a small amount of polymerization regulators, such as mercapto compounds and preferably mercapto ethanol, and alkyl mercaptanes, such as t-dodecyl mercaptane, octyl mercaptane, phenyl mercaptane, octyldecyl mercaptane, butyl mercaptane; thiocarboxylic acids such as thioacetic acid or thiolactic acid. These regulators can be applied, if necessary, in an amount of up to 2 %wt, calculated relative to the complete weight of the comonomers.

Preferably said regulators are dissolved in the monomer mixture to be gradually added and the concentration of them is kept constant during the polymerization time period.

After substantial completion of the polymerization reaction, the reaction mixture is neutralized with an organic base, and homogenized and water is added to the organic phase in a volume of from 10 to 1 times the organic phase volume and preferably of from 5 to 1.5 times the organic phase volume, whereupon a homogeneous, stable aqueous interpolymer dispersion is reached.

The neutralization of the carboxyl groups of the initially prepared interpolymers can be carried out by using organic amines such as aminomethylpropanol, aminomethylbutanol, dimethylethanolamine, diethylethanolamine, triethanolamine, monoisopropanolamine, diisopropanolamine, triisopropanolamine, 2-dimethylamino-2-methyl-1-propanol, of which the environmental friendly ones are preferred.

It will be appreciated that another aspect of the present invention is formed by curable aqueous coating compositions derivable from the hereinbefore specified aqueous interpolymer compositions.

These curable aqueous coating compositions may be prepared from the initially prepared aqueous interpolymer compositions, to which curing agents or cross-linking agents are added. Such curing or cross-linking agents may be selected from aminoplast resins, polyisocyanates or anhydride groups containing compounds.

Said curing agents are added in such an amount, that the molar ratio between the hydroxyl groups occurring in the interpolymer and the reactive groups of the curing agent is in the range of from 0.3:1 to 3:1.

Attractive curing or cross-linking resins for curable coating systems are for example those disclosed in EP-A-244,897 and EP-A-281,213.

Particularly suitable cross-linking agents are the ambient curing reactive isocyanates and thiols, as well as the high temperature curing aminoplast-type resins, such as alkoxylated reaction products of formaldehyde with melamine or benzoguanamide.

Other suitable cross-linking agents include urea-aldehyde resins, phenol-aldehyde resins, bisphenolic or anhydride curing agents, polycarboxylic compounds, dicyandiamide and blocked polyisocyanates.

When some types of these cross-linking agents are used, catalysts may be added to the curable coating compositions to reach curing at lower stoving temperatures. Suitable catalysts which may be employed in the curable coating compositions for this purpose are acids such as orthophosphoric acid or p-toluenesulphonic acid. These catalysts may be used in an amount in the range of from e.g. 0.05 to 2 %wt, calculated as pure catalyst relative to the interpolymer and cross-linking agent.

The relative weight proportion of the interpolymer resin relative to the weight of interpolymer and curing agent is typically of from 5 to 50 %wt, calculated relative to the total weight of the interpolymer and curing agent. For the most preferred curable aqueous coating compositions the weight proportion of the curing agent, such as hexamethoxymethyl melamine (Cymel 301, a trademark) is from 10 to 30 %wt and most preferably from 13 to 17 %wt.

The curable coating compositions according to the present invention can be applied by a variety of methods known in the art, for example by spraying, dipping or brush- or roller coating. Pigments, fillers, dispersing agents and other components known for coating formulations may be added to the curable binder system comprising the interpolymers according to the present invention.

Such curable coating compositions show, after application, preferably by spraying and baking, excellent properties and more particularly when applied as automotive topcoats. Baking will comprise a flash-off step during from 1 to 10 minutes at a temperature of from 60 to 80 °C, and preferably at 70 °C, followed by a curing step of from 5 to 60 minutes and preferably from 20 to 40 minutes and at a temperature of from 100 to 200 °C and preferably of from 120 to 160 °C. Most preferably the flash-off step will be carried out at 70 °C during 5 minutes and the curing step will be carried out at 140 °C during 30 minutes.

It will be appreciated that another aspect of the present invention is formed by a process for the preparation of the aforementioned interpolymers and of curable aqueous coating compositions, by:
(1) starting with an initial reactor charge of the solvent in an amount of from 10 to 20 %wt of the total weight of the monomers, wherein has been dissolved an amount of from 5 to 15 %wt of the total amount of component (d), and from 1 to 8 %wt of the total amount of the components (a), (b), (c) and (e);
(2) heating the reactor charge to the desired reaction temperature; and,
(3) at this substantially constant temperature, gradually adding the remaining monomers and an amount of initiator of from 1 to 5 %wt and preferably from 2 to 4 %wt, calculated relative to the total weight of the monomers, within a period from 3 to 5 hours and preferably from 3.5 to 4.5 hours, followed by a post reaction during from 1 to 3 hours and preferably about 2 hours.

The process for the preparation of curable aqueous coating compositions according to the present invention comprises:
(1) preparing the interpolymers according to present invention;
(2) neutralizing the reaction mixture after substantial completion of the reaction with a base and preferably an organic base;
(3) homogenising and adding water to the organic phase in a volume of from 10 to 1 times the organic phase volume and preferably of from 5 to 1.5 times the organic phase volume; and
(4) mixing the obtained homogeneous stable aqueous interpolymer suspension with a curing or cross-linking agent in an amount, such that the molar ratio between the hydroxyl groups occurring in the interpolymer and the reactive groups of the curing agent is in the range of from 0.3:1 to 3:1 and/or the relative weight proportion of the interpolymer is in the range of from 5 to 50 %wt and preferably from 10 to 20 %wt and more preferably from 13 to 17 %wt.

It will be appreciated that another aspect of the present invention is formed by the use of the curable, aqueous coating compositions as specified hereinbefore, optionally containing usual additional ingredients such as pigments, fillers and dispersing agents.

Such use comprises spraying, dipping, brush- or roller coating, and baking of the applied coating layer, comprising a flash-off step during from 1 to 10 minutes at a temperature of from 60 to 80 °C, followed by a curing step of from 5 to 60 minutes at a temperature of from 100 to 200 °C.

The invention is illustrated by the following examples.

### Example 1

Several interpolymer compositions were prepared (experiments 1-7) in a 1-litre glass reactor, equipped with a thermocouple, a condenser, a stainless steel stirrer and a nitrogen inlet, starting from varying weight proportions of the hereinafter specified comonomers. For each copolymerization run 10 %wt of the total amount of the VeoVa component intake, 5 %wt of the total intake of (meth)acrylate and (meth)acrylic acid and 15 %wt of ButylOXITOL (calculated relative to the weight of the total monomers intake) were charged into the reactor and heated up to 130 °C. At that temperature, the remainder of the monomers, i.e. 90 %wt of the total VeoVa intake and 95 %wt of the (meth)acrylic acid and esters thereof with t-butylperoxybenzoate (Trigonox C) in an amount of 3 %wt, calculated relative to the total monomer weight, were gradually added to the reaction mixture during 4 hours. After the complete addition of the monomers an additional amount of 0.5 %wt of initiator was added and the temperature was kept at 130 °C for 2 more hours. The respective weight proportions of the comonomers in the total comonomer intake are listed hereinafter in Table I.

### Example 2

About the same procedure as described in Example 1 was followed (exp. 8) with the difference that methylPROXITOLacetate (PROXITOL, a registered trademark) instead of butylOXITOL was used in an amount of 15 %wt, calculated relative to the weight of the total monomer mixture, that the temperature was kept at 150 °C and that as initiator di-t-butylperoxide (Trigonox B) was used (3 %wt).

### Example 3

About the same procedure as described in Example 1 was followed (exp. 9) with the difference that as solvent 15 %wt of 1,1,1-trihydroxymethylpropane having been ethoxylated with 0.8 ethylene oxide units on average, was used instead of butylOXITOL and a comonomer mixture as listed in Table I.

### Example 4

About the same procedure as described in Example 1 was followed (exp. 10) with the difference that as solvent 15 %wt of 1,4-butanediol was used and a comonomer mixture as listed in Table I.

### Comparative Example A

A comonomer mixture as specified hereinafter in Table I (exp. 11) was polymerized according the procedure described in Example 1 of GB-A-1,145,564, giving use to a significant lower conversion degree and consequently an unattractive free monomer content of the finally obtained interpolymer.

From all the prepared interpolymers aqueous dispersions were prepared by neutralization of the initially prepared interpolymer with aminomethylpropanol, using a neutralization degree of 75% (percentage of acid group neutralized with the amine) and dispersion of the mixture in water to get a final solids content of 20-30 %wt, depending on the dispersion viscosity.

From these aqueous dispersions coating compositions were prepared by mixing 42.5 g of interpolymer, 7.5 g of hexamethoxymethylmelamine (Cymel 301) and 1.5 g of p-toluenesulphonic acid. These coating compositions contained about 10 %wt of initially applied solvent. Some relevant interpolymer properties and film properties of the cured coating films are listed in Table II. As to cured coating film properties, the coating film was applied after at least three days from the preparation of the curable coating composition.

**Table I -**

| Total comonomer compositions | | | | | |
|---|---|---|---|---|---|
| Experiments | hydroxyethyl acrylate % m/m | acrylic acid % m/m | n-butyl acrylate % m/m | VeoVa 9 % m/m | methyl methacrylate % m/m |
| 1 | 9 | 6 | 10 | 65 | 10 |
| 2 | 9 | 6 | 65 | 10 | 10 |
| 3 | 9 | 6 | 10 | 10 | 65 |
| 4 | 9 | 6 | 37.5 | 37.5 | 10 |
| 5 | 9 | 6 | 10 | 37.5 | 37.5 |
| 6 | 9 | 6 | 37.5 | 10 | 37.5 |
| 7 | 9 | 6 | 28.33 | 28.33 | 28.33 |
| 8 | 9 | 6 | 28.33 | 28.33 | 28.33 |
| 9 | 9 | 6 | 28.33 | 28.33 | 28.33 |
| 10 | 9 | 6 | 28.33 | 28.33 | 28.33 |
| 11 | 8 | 6 | 30 | 23 | 33 |

**Table II**

| Experiment No. | Conversion % wt | Thickness µm | Hardness sec | Flexibility Kg·cm (inch.lb) | Solvent MEK res. db rubs. | Stability |
|---|---|---|---|---|---|---|
| 1 | 98.8 | 23 | 186 | 2.3 (2) | 100 | 14 |
| 2 | 99.7 | 21 | 33 | 35 (30) | 40 | >98 |
| 3 | 99.4 | 21 | 183 | <2.3 (<2) | 100 | 35 |
| 4 | 99.5 | 22 | 203 | 4.6 (4) | 100 | >70 |
| 5 | 99.6 | 18 | 180 | 12 (10) | >100 | 25 |
| 6 | 99.5 | 22 | 137 | 23 (20) | 100 | >70 |
| 7 | 99.6 | 21 | 162 | 35 (30) | 100 | >170 |
| 8 | 99.5 | 10 | 167 | <12 (<10) | 64 | 35 |
| 9 | | 21 | 182 | 12 (10) | 100 | >45 |
| 10 | | 18 | 192 | 12 (10) | 100 | >120 |
| 11 | 96.4 | 22 | 182 | 12 (10) | 100 | >115 |

The "storage stability" as used in Table II is measured at 40 °C. To obtain an indication of interpolymer suspension storage stability, an accelerated test is carried out at 40 °C on a sample of about 100 ml. Viscosity, pH and settlement of solids are noted after various periods of time e.g. 1, 2, 4 and 8 weeks. After 6 weeks the suspension is only allowed to show slight settlement of solids which solids can be easily redispersed, whereas no change in overall viscosity may occur.

The "MEK rubs" as specified in Table II is the number of double rubs given by hand to the cured coating with a cloth wetted with methyl ethyl ketone until the coating was wiped off. "MEK rubs" greater than 100 is an indication of a good cure and solvent resistance.

The "flexibility" or impact strength is measured as reverse impact strength determined according to the British Standard Falling Ball test.

The conversion degree is determined by residual monomer measurement by GLC procedure which measures residual monomers separately by using standard calibration of the analysis equipment for each monomer to be included in the comonomer starting mixture.

The analysis should be carried out shortly after preparation of interpolymer suspension and before adjustment, if any, of pH.

Using this GLC method residual monomer concentrations down to at least 0.1 %wt (free monomer based on interpolymer mass) can be measured separately for the respective monomers.

The method makes use of a gas chromatograph equipped as described in principle in Shell Resins, VeoVa Technical Manual VM 2.1 "Principles of design and manufacture of VeoVa latices", issued June 1988, pages 24 and 25. The monomer content is calculated as defined on page 26 of this Technical Manual.

The hardness of the film as specified in Table II is measured as König hardness, determined using an Erichson (trademark) apparatus.

The "film thickness" as indicated throughout the present specification was determined with a Permascope ES (trademark) of Fisher.

The viscosity values as indicated throughout the present specification were determined using a Brookfield (trademark) viscosimeter at a temperature of 23 °C.

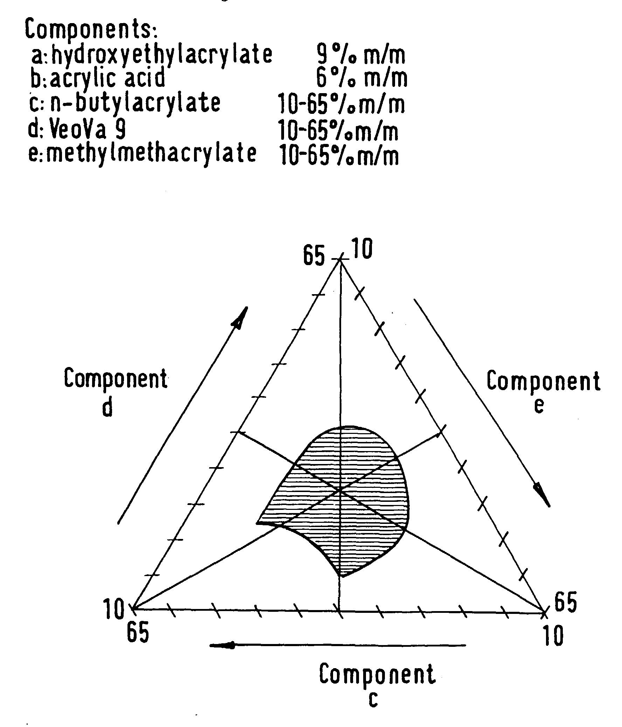

## Claims

1. Process for preparing hydroxyl groups and carboxyl groups-containing interpolymers, by radical solution polymerization of:
(a) hydroxyalkyl esters of ethylenically unsaturated acids, wherein the acid moiety contains from 2 to 9 carbon atoms, wherein the hydroxy alkyl moiety contains from 2 to 6 carbon atoms in an amount of from 4 to 20 %wt, calculated relative to the weight of the complete monomer mixture;
(b) an ethylenically unsaturated acid, containing from 2 to 9 carbon atoms in an amount of from 4 to 20 %wt, calculated relative to the weight of the complete monomer mixture;
(c) alkyl esters of ethylenically unsaturated acids, containing from 2 to 9 carbon atoms, the alkyl group of which may contain from 4 to 8 carbon atoms, in an amount of from 10 to 70 %wt, calculated relative to the weight of the complete monomer mixture;
(d) the vinyl ester of Versatic acid (being a trademark), containing in the acid moiety 9 carbon atoms, optionally mixed with up to 30 %wt of the total weight of said vinyl esters, of the vinyl ester of Versatic acid, containing in the acid moiety 10 carbon atoms, in an amount of from 10 to 70 %wt, calculated relative to the weight of the complete monomer mixture; and
(e) alkyl esters of methacrylic acid and/or acrylic acid, the alkyl group in which contains from 1 to 3 carbon atoms, in an amount of from 1C to 70 %wt, calculated relative to the weight of the complete monomer mixture;
the sum of the respective amounts of components being 100%, at a temperature in the range of from 110 to 150 °C in an inert, water miscible organic solvent system, by
(1) starting with an initial reactor charge of the solvent in an amount of from 10 to 20 %wt of the total weight of the monomers, wherein has been dissolved an amount of from 10 to 15 %wt of the total amount of component (d), and from 1 to 8 %wt of the total amount of the components (a), (b), (c) and (e);
(2) heating the reactor charge to the desired reaction temperature; and
(3) at this constant temperature, gradually adding the remaining monomers and an amount of initiator of from 1 to 5 %wt, calculated relative to the total weight of the monomers, within a period from 3 to 5 hours, followed by a post reaction during from 1 to 3 hours.

2. Process according to claim 1, characterized in that component (a) is selected from hydroxyethyl methacrylate or hydroxyethyl acrylate.

3. Process according to claim 1, characterized in that component (b) is selected from acrylic acid and/or methacrylic acid.

4. Process according to claim 1, characterized in that as component (c) n-butyl esters of acrylic acid and/or methacrylic acid are used.

5. Process according to claim 1, characterized in that as component (d) pure VeoVa 9 is used.

6. Process according to claim 1, characterized in that component (e) is selected from methyl acrylate, methyl methacrylate, ethyl acrylate or ethyl methacrylate.

7. Process according to claim 1, characterized in that the monomer composition comprises:
(a) from 8 to 11 %wt hydroxyalkyl acrylate,
(b) from 4 to 8 %wt acrylic acid,
(c) from 23 to 30 %wt butyl acrylate,
(d) from 23 to 30 %wt VeoVa 9, and
(e) from 23 to 30 %wt methyl methacrylate, the total amounting to 100%.

8. Process for preparing stable aqueous interpolymer dispersions by neutralization of a reaction mixture containing interpolymers prepared according to claim 1, after completion of the polymerization reaction, with an organic base and homogenization and addition of water to the organic phase in a volume of from 10 to 1 times the organic phase volume.

9. Process for preparing curable aqueous coating compositions from aqueous interpolymer dispersion prepared according to claim 8, by addition of curing agents or cross-linking agents.

10. Process for the use of a curable aqueous coating composition obtained according to claim 9, comprising application by spraying, dipping or brush- or roller coating and subsequently baking of the coating layer, which baking comprises a flash-off step during from 1 to 10 minutes at a temperature of from 60 to 80 °C, and a curing step of from 5 to 60 minutes, and of from 100 to 200 °C.

## Patentansprüche

1. Verfahren zur Herstellung von Hydroxylgruppen und Carboxylgruppen enthaltenden Interpolymeren durch Radikallösungspolymerisation von:
(a) Hydroxyalkylestern von ethylenisch ungesättigten Säuren, worin der Säureanteil 2 bis 9 Kohlenstoffatome enthält und worin der Hydroxyalkylrest 2 bis 6 Kohlenstoffatome enthält, in einer Menge von 4 bis 20 Gew.-%, bezogen auf das Gewicht des gesamten Monomerengemisches;
(b) einer ethylenisch ungesättigten Säure mit einem Gehalt an 2 bis 9 Kohlenstoffatomen in einer Menge von 4 bis 20 Gew.-%, bezogen auf das Gewicht des gesamten Monomerengemisches;
(c) Alkylestern von ethylenisch ungesättigten Säuren mit einem Gehalt an 2 bis 9 Kohlenstoffatomen, deren Alkylgruppe 4 bis 8 Kohlenstoffatome enthalten kann, in einer Menge von 10 bis 70 Gew.-%, bezogen auf das Gewicht des gesamten Monomerengemisches;
(d) dem Vinylester von versaticsäure (Handelsmarke) mit einem Gehalt an 9 Kohlenstoffatomen im Säureteil, gegebenenfalls im Gemisch mit bis zu 30 Gew.-% des Gesamtgewichtes dieser Vinylester an dem Vinylester von Versaticsäure mit einem Gehalt an 10 Kohlenstoffatomen im Säureteil, in einer Menge von 10 bis 70 Gew.-%, berechnet auf das Gewicht des gesamten Monomerengemisches;
(e) Alkylestern von Methacrylsäure und/oder Acrylsäure, in denen die Alkylgruppe 1 bis 3 Kohlenstoffatome enthält, in einer Menge von 10 bis 70 Gew.-%, bezogen auf das Gewicht des gesamten Monomerengemisches;
wobei die Summe der jeweiligen Mengen der Komponenten 100% beträgt, bei einer Temperatur im Bereich von 110 bis 150°C in einem inerten, mit Wasser mischbaren organischen Lösungsmittelsystem, indem
(1) mit einer Anfangsreaktorbeschickung des Lösungsmittels in einer Menge von 10 bis 20 Gew.-% des Gesamtgewichtes der Monomere begonnen wird, worin eine Menge von 10 bis 15 Gew.-% der Gesamtmenge an Komponente (d) und von 1 bis 8 Gew.-% der Gesamtmenge an den Komponenten (a), (b), (c) und (e) aufgelöst worden sind;
(2) die Reaktorbeschickung auf die gewünschte Reaktionstemperatur erhitzt wird; und
(3) bei dieser konstanten Temperatur stufenweise die restlichen Monomere und eine Menge Initiator von 1 bis 5 Gew.-%, bezogen auf das Gesamtgewicht der Monomere, innerhalb einer Zeitspanne von 3 bis 5 Stunden zugesetzt werden, mit einer anschließenden Nachreaktion während 1 bis 3 Stunden.

2. Verfahren nach Anspruch 1, dadurch gekennzeichnet, daß die Komponente (a) unter Hydroxyethylmethycrylat oder Hydroxyethylacrylat ausgewählt wird.

3. Verfahren nach Anspruch 1, dadurch gekennzeichnet, daß die Komponente (b) unter Acrylsäure und/oder Methacrylsäure ausgewählt wird.

4. Verfahren nach Anspruch 1, dadurch gekennzeichnet, daß als Komponente (c) n-Butylester von Acrylsäure und/oder Methacrylsäure verwendet werden.

5. Verfahren nach Anspruch 1, dadurch gekennzeichnet, daß als Kompontente (d) reines VeoVa 9 verwendet wird.

6. Verfahren nach Anspruch 1, dadurch gekennzeichnet, daß die Komponente (e) unter Methylacrylat, Methylmethacrylat, Ethylacrylat oder Ethylmethacrylat ausgewählt wird.

7. Verfahren nach Anspruch 1, dadurch gekennzeichnet, daß die Monomerenzusammensetzung
(a) von 8 bis 11 Gew.-% Hydroxyalkylacrylat,
(b) von 4 bis 8 Gew.-% Acrylsäure,
(c) von 23 bis 30 Gew.-% Butylacrylat,
(d) von 23 bis 30 Gew.-% Veova 9 und
(e) von 23 bis 30 Gew.-% Methylmethacrylat
umfaßt, wobei die Gesamtmenge 100 % beträgt.

8. Verfahren zur Herstellung von stabilen wäßrigen Interpolymerdispersionen durch Neutralisieren eines Reaktionsgemisches, das gemäß Anspruch 1 hergestellte Interpolymere enthält, nach Abschluß der Polymerisationsreaktion mit einer organischen Base und Homogenisieren und Zusetzen von Wasser zur organischen Phase in einem Volumen vom 10-fachen bis 1-fachen des Volumens der organischen Phase.

9. Verfahren zur Herstellung härtbarer wäßriger Überzugszusammensetzungen aus gemäß Anspruch 8 hergestellten wäßrigen Interpolymerdispersionen durch Zusetzen von Härtungsmitteln oder Vernetzungsmitteln.

10. Verfahren zur Anwendung einer gemäß Anspruch 9 erhaltenen härtbaren wäßrigen Überzugszusammensetzung, umfassend ein Auftragen durch Aufsprühen, Tauchen oder Bürsten- oder Walzenbeschichten und anschließendes Einbrennen der Überzugsschicht, welches Einbrennen eine Abtreibstufe während 1 bis 10 Minuten bei einer Temperatur von 60 bis 80°C und eine Härtungsstufe von 5 bis 60 Minuten bei 100 bis 200°C umfaßt.

## Revendications

1. Procédé de préparation d'interpolymères contenant des groupes hydroxyle et des groupes carboxyle, par la polymérisation en solution radicalaire :
(a) d'esters hydroxyalkyliques d'acides éthyléniquement insaturés, dans lesquels le fragment acide contient de 2 à 9 atomes de carbone, dans lesquels le fragment hydroxyalkyle contient de 2 à 6 atomes de carbone, en une quantité de 4 à 20 % en poids, calculée par rapport au poids du mélange de monomères complet;
(b) d'un acide éthyléniquement insaturé, contenant de 2 à 9 atomes de carbone, en une quantité de 4 à 20 % en poids, calculée par rapport au poids du mélange de monomères complet;
(c) d'esters alkyliques d'acides éthyléniquement insaturés, contenant de 2 à 9 atomes de carbone, dont le groupe alkyle peut contenir de 4 à 8 atomes de carbone, en une quantité de 10 à 70 % en poids, calculée par rapport au poids du mélange de monomères complet;
(d) de l'ester vinylique d'acide Versatic (qui est une marque déposée), contenant dans le fragment acide 9 atomes de carbone, éventuellement mélangé avec jusqu'à 30 % en poids du poids total des esters vinyliques précités, de l'ester vinylique d'acide Versatic, contenant dans le fragment acide 10 atomes de carbone, en une quantité de 10 à 70 % en poids, calculée par rapport au poids du mélange de monomères complet; et
(e) d'esters alkyliques d'acide méthacrylique et/ou d'acide acrylique, dans lesquels le groupe alkyle contient de 1 à 3 atomes de carbone, en une quantité de 10 à 70 % en poids, calculée par rapport au poids du mélange de monomères complet;
la somme des quantités respectives de composants étant de 100 %, à une température allant de 110 à 150°C dans un système de solvant organique miscible à l'eau, inerte,
(1) en partant d'une charge de réacteur initiale du solvant en une quantité de 10 à 20 % en poids du poids total des monomères, dans laquelle a été dissoute une quantité de 10 à 15 % en poids de la quantité totale de composant (d), et de 1 à 8 % en poids de la quantité totale des composants (a), (b), (c) et (e);
(2) en chauffant la charge de réacteur à la température réactionnelle désirée; et
(3) à cette température constante, en ajoutant progressivement les monomères restants et une quantité d'initiateur de 1 à 5 % en poids, calculée par rapport au poids total des monomères, en une période de 3 à 5 heures, opération suivie d'une postréaction pendant de 1 à 3 heures.

2. Procédé suivant la revendication 1, caractérisé en ce que le composant (a) est choisi parmi le méthacrylate d'hydroxyéthyle et l'acrylate d'hydroxyéthyle.

3. Procédé suivant la revendication 1, caractérisé en ce que le composant (b) est choisi parmi l'acide acrylique et/ou l'acide méthacrylique.

4. Procédé suivant la revendication 1, caractérisé en ce que comme composant (c) on utilise des esters n-butyliques d'acide acrylique et/ou d'acide méthacrylique.

5. Procédé suivant la revendication 1, caractérisé en ce que comme composant (d) on utilise du VeoVa 9 pur.

6. Procédé suivant la revendication 1, caractérisé en ce que le composant (e) est choisi parmi l'acrylate de méthyle, le méthacrylate de méthyle, l'acrylate d'éthyle et le méthacrylate d'éthyle.

7. Procédé suivant la revendication 1, caractérisé en ce que la composition de monomères comprend :
(a) de 8 à 11 % en poids d'acrylate d'hydroxyalkyle,
(b) de 4 à 8 % en poids d'acide acrylique,
(c) de 23 à 30 % en poids d'acrylate de butyle,
(d) de 23 à 30 % en poids de VeoVa 9, et
(e) de 23 à 30 % en poids de méthacrylate de méthyle, le total s'élevant à 100 %.

8. Procédé de préparation de dispersions d'interpolymères aqueuses stables par neutralisation d'un mélange réactionnel contenant des interpolymères préparés suivant la revendication 1, après achèvement de la réaction de polymérisation, avec une base organique et homogénéisation et addition d'eau à la phase organique en un volume de 10 à 1 fois le volume de phase organique.

9. Procédé de préparation de compositions de revêtement aqueuses durcissables à partir d'une dispersion d'interpolymère aqueuse préparée suivant la revendication 8, par addition d'agents de durcissement ou d'agents de réticulation.

10. Procédé d'utilisation d'une composition de revêtement aqueuse durcissable obtenue suivant la revendication 9, comprenant l'application par pulvérisation, trempage ou application à la brosse ou au rouleau et ensuite cuisson de la couche de revêtement, laquelle cuisson comprend une étape de préséchage pendant de 1 à 10 minutes à une température de 60 à 80°C, et une étape de durcissement de 5 à 60 minutes, et à une température de 100 à 200°C.
